# EUROPÄISCHE PATENTSCHRIFT

(11) **EP 2 358 837 B1**
(45) Veröffentlichungstag und Bekanntmachung des Hinweises auf die Patenterteilung: **01.05.2013**
(21) Anmeldenummer: 09760511.7
(22) Anmeldetag: 19.11.2009
(51) Int. Cl.: C09J 201/00, C09J 189/00, B24C 9/00, C09J 125/14, C07K 14/37

(54) **ZUSAMMENSETZUNG ENTHALTEND EIN HYDROPHOBIN ZUM VERKLEBEN VON ERZEUGNISSEN AUS PAPIER**
COMPOSITION CONTAINING A HYDROPHOBIN FOR ADHESION OF PAPER PRODUCTS
COMPOSITION CONTENANT UNE HYDROPHOBINE POUR COLLER DES PRODUITS A BASE DE PAPIER

(30) Priorität: 19.11.2008 EP 08169418
(43) Veröffentlichungstag der Anmeldung: 24.08.2011
(73) Patentinhaber: BASF SE, 67056 Ludwigshafen (DE); Landen, Franz-Josef, 70184 Stuttgart (DE)
(72) Erfinder: BAUS, Ulf, 69221 Dossenheim (DE); MONTAG, Thorsten, 67373 Dudenhofen (DE); SUBKOWSKI, Thomas, 68526 Ladenburg (DE); BOLLSCHWEILER, Claus, 69118 Heidelberg (DE); LANDEN, Franz-Josef, 70184 Stuttgart (DE)
(86) Internationale Anmeldenummer: PCT/EP2009/065467
(87) Internationale Veröffentlichungsnummer: WO 2010/057946

(56) Entgegenhaltungen:
- US-A1- 2006 040 349

## Beschreibung

Die vorliegende Erfindung betrifft Zusammensetzungen enthaltend mindestens ein Hydrophobin (H) und einen Klebstoff (K) sowie ein entsprechendes Verfahren zum Verkleben von Papiererzeugnissen, insbesondere zum Klebebinden von Druckerzeugnissen.

Neben dem klassischen Buchbindeverfahren mit Faden oder Drahtheftung sind schon seit vielen Jahren verschiedene Verfahren für das Klebebinden bekannt. Unter Klebebinden versteht man Bindeverfahren für Bücher und sonstige Druckerzeugnisse, wobei auf den Rücken des geschnittenen Buchblocks, gegebenenfalls unter Auffächern, Klebstoffe aufgetragen werden, die den Zusammenhalt der Blätter gewährleisten.

Das Klebebinden geht zurück auf die von Emil Lumbeck um 1938 erfundene Technik der Fächer-Klebebindung ("Lumbecken"), die eine kostengünstige Alternative zum Fadenheften bietet. Hierbei wird der aus Einzelblättern bestehende Buchblock am Ende aufgefächert und die einzelnen Seiten jeweils mit einem Klebstoff bestrichen. Anschließend wird der Buchblock wieder aufgerichtet und mit Gaze hinterklebt. Diese Art der Klebebindung ist zwar stabil, aber nicht für die Massenfertigung geeignet.

Industriell erfolgt das Klebebinden ohne Auffächern des Buchblockes, so dass der Klebstoff nur an den Blattkanten haftet. Um dennoch eine hohe Festigkeit der Klebebindung zu erreichen, wird der Buchblock-Rücken vor dem Auftragen des Klebstoffs aufgeraut, um eine größere Klebefläche und damit eine höhere Festigkeit der Bindung zu erreichen. Die Sicherstellung der erforderlichen Festigkeitswerte ist trotz ständiger technischer Weiterentwicklungen bis heute nicht zufrieden stellend gelöst.

Die Klebebindung hat sich gegenüber anderen Bindeverfahren für Papiererzeugnisse aus Gründen der Wirtschaftlichkeit seit langem durchgesetzt. Die Funktion des Klebstoffs ist es unter anderem über eine Blattkantenverklebung die einzelnen Blätter zusammenzuhalten oder etwa einen Umschlag an dem Buchblock zu befestigen. Für die Klebebindung kommen in der Regel Schmelzklebstoffe (Hotmelt-Klebstoffe), reaktive Schmelzklebstoffe (z. B. Polyurethan-Schmelzklebstoffe, sogenannte PUR-Klebstoffe) oder Klebstoffe auf wässriger Basis (beispielsweise Dispersions-Klebstoffe) zum Einsatz.

Bei der Heißleimung mit Schmelzklebstoffen wird ein thermoplastisches Polymer (beispielsweise Ethylvinylacetat-Copolymere) geschmolzen und anschließend auf den Buchrücken aufgetragen. Nachteilig hierbei ist, dass ein hoher Energieeintrag notwendig ist und der Heißleim eine hohe Viskosität aufweist. Die erhaltenen Bindungen weisen zudem keine ausreichende Flexibilität auf. Dies führt etwa zu einem nachteiligen Plan-Aufschlagsverhalten (Lay flat) und dazu, dass aufgeschlagene Bücher von alleine wieder zuklappen.

Ebenso werden auch wässrige Klebstoffe (in der Literatur teilweise auch als Kalt- oder Weißleim bezeichnet) in der Druckweiterverarbeitung und insbesondere in der Buchbinderei eingesetzt. Es werden beispielsweise wässrige Klebstoffe auf Basis von natürlichen Polymeren, wie beispielsweise Glutin (Glutinleim) oder Stärke (bzw. Stärkederivate) sowie Klebstoffe auf Basis von synthetischen Polymeren (wie Polyvinylalkohol) und Dispersions-Klebstoffe eingesetzt. Für die Buckrückenklebebindung in der Buchbinderei werden vorwiegend Dispersions-Klebstoffe eingesetzt.

Die eingesetzten Dispersions-Klebstoffe bestehen vorwiegend aus 40- bis 60-prozentigen wässrigen Dispersionen auf Basis von synthetischen, Film-bildenden Polymeren, vorzugsweise Polyvinylacetat oder auch anderer Polyvinylester. Sie stellen eine wichtige Klebstoffgruppe im Bereich der Druckweiterverarbeitung dar und können für nahezu alle anfallenden Klebearbeiten eingesetzt werden. Vorteil der wässrigen Klebstoffe ist, dass sie verhältnismäßig niedrige Viskositäten aufweisen und dadurch besser in die Poren des Papiers eindringt. Der resultierende Klebefilm ist deutlich dünner und flexibler im Vergleich zur Heißleimung.

Im Stand der Technik werden auch Kombinationen (z. B. zweistufige Verfahren) unter Einsatz von Dispersions-Klebstoffen und Schmelzklebstoffen beschrieben (siehe z. B. WO 1985/04669). Wichtig für das Binden mit Dispersions-Klebstoffen ist die Zugänglichkeit der Papierfaser, die meist durch spezielle Rückenbearbeitung, wie spezielle Schneideverfahren, verbessert wird (siehe EP-A 1 063 104).

Handelübliche Dispersions-Klebstoffe zeigen nach der Trocknung überwiegend eine gute Flexibilität. Allerdings ist die Haftung der Blätter mit dem Leim oft zu gering. Bei mechanischer Belastung, zum Beispiel durch wiederholtes Aufschlagen des Buches, lösen sich so nach kurzer Zeit einzelne Blätter vom Buchverband.

Eine Aufgabe der vorliegenden Erfindung besteht darin, die Haftung eines wässrigen Klebstoffes mit dem Fasermaterial zu erhöhen. Der resultierende Klebefilm sollte zudem eine hohe Flexibilität aufweisen. Daneben sollte Klebstoff-Zusammensetzung in der Buchbinderei eine gute Verarbeitbarkeit aufweisen. Darunter sind beispielsweise zu nennen, dass die Klebstoff-Zusammensetzung eine niedrige Viskosität aufweist und schnell abbindet, um eine gute Verarbeitbarkeit und kurze Prozesszeiten beim Herstellungsverfahren zu gewährleisten.

Es wurde nun gefunden, dass sich durch Zusatz von speziellen Proteinen, den Hydrophobinen, zu Klebstoffen für die Verklebung von Papiererzeugnissen (beispielsweise bei der Klebebindung von Büchern) eine überraschend deutliche Verbesserung der mechanische Stabilität und Flexibilität der resultierenden Klebefilme erzielen lässt. Zudem erfüllt die erfindungsgemäße Klebstoff-Zusammensetzung und das dazugehörige erfindungsgemäße Verfahren die oben genannten Anforderungen wie hohe Flexibilität des Klebefilms, gute Verarbeitbarkeit und kurze Prozesszeiten.

Hydrophobine sind kleine, cysteinreiche Proteine von etwa 100 bis 150 Aminosäuren, welche z. B. in filamentösen Pilzen wie *Schizophyllum commune* vorkommen. Sie weisen in aller Regel 8 Cystein-Einheiten im Molekül auf. Hydrophobine können aus natürlichen Quellen isoliert werden, sie können aber auch mittels gentechnischer Verfahren gewonnen werden, wie beispielsweise in WO 2006/082 251 oder WO 2006/131 564 offenbart. Im Stand der Technik ist die Verwendung von Hydrophobinen bereits für verschiedene Anwendungen vorgeschlagen worden. So schlägt WO 1996/41882 die Verwendung von Hydrophobinen als Emulgatoren, Verdicker, oberflächenaktive Substanzen, zum Hydrophilieren hydrophober Oberflächen, zur Verbesserung der Wasserbeständigkeit-hydrophiler Substrate, zur Herstellung von Öl-in-Wasser-Emulsionen oder von Wasser-in-Öl-Emulsionen vor.

Weiterhin werden pharmazeutische Anwendungen, wie die Herstellung von Salben, sowie kosmetische Anwendungen und die Herstellung von Haarshampoos vorgeschlagen. EP-A 1 252 516 offenbart die Beschichtung verschiedener Substrate mit einer Hydrophobin enthaltenden Lösung bei einer Temperatur von 30 bis 80°C. Weiterhin wurde beispielsweise die Verwendung von Hydrophobinen als Demulgator (siehe WO 2006/103251), als Verdunstungsverzögerer (siehe WO 2006/128877) und Verschmutzungsinhibitor (siehe WO 2006/103215) bereits vorgeschlagen.

In dem Dokument DE-A 10 328 509 wird ein wässriger Klebstoff für die Buchfertigung beschrieben, dem als Komponente Gelatine oder feinkolloidale Gelatinelösung zugegeben wurde. Dadurch soll gewährleistet werden, dass der wässrige Anteil der Dispersion leichter in das Papiergefüge eindringt.

Im Dokument WO 2006/103225 wird die Verwendung von Hydrophobin als Haftvermittler beschrieben. Hier wird allerdings auf die Verklebung von Kunststoffoberflächen untereinander und auf die Verklebung von Kunststoffoberflächen mit Metallflächen abgezielt, wobei hier andere Voraussetzungen und Anforderungen für das Klebstoff-System gegeben sind.

Die vorliegende Erfindung betrifft eine Zusammensetzung, insbesondere zum Verkleben von Papiererzeugnissen, enthaltend (bzw. insbesondere bestehend aus):
a) 0,001 - 10 Gew.-% eines Hydrophobins (H),
b) einen Klebstoff (K),
c) gegebenenfalls ein Löse- und/oder Dispergiermittel (L) und
d) gegebenenfalls weitere Zusatzstoffe (Z).

Bevorzugt enthält die erfindungsgemäße Zusammensetzung zum Verkleben von Papiererzeugnissen (bzw. insbesondere bestehend aus):
a) 0,001 - 10 Gew.-% eines Hydrophobins (H),
b) 5 - 99,999 Gew.-% eines Klebstoffes (K),
c) 0 - 90 Gew.-% eines Löse- und/oder Dispergiermittels (L),
d) 0 - 10 Gew.-% weiterer Zusatzstoffe (Z).

Die erfindungsgemäße Zusammensetzung kann abhängig von der Applikationsmethode und des verwendeten Klebstoffes verschiedene Konsistenzen aufweisen. Es ist möglich, dass die Zusammensetzung eine hochviskose pastenartige Konsistenz, d.h. einen hohen Klebstoffanteil, aufweist, oder aber eine niedrigviskose Flüssigkeit mit geringem Klebstoffanteil darstellt. Darüber hinaus umfasst die erfindungsgemäße Zusammensetzung auch den Klebstoff-Film auf einem Papiererzeugnisses in allen Stufen des Klebeverfahrens (etwa eine fertig getrocknete Klebebindung auf dem Buchrücken sowie den Klebebindungs-Film auf dem Buchrücken vor dem Trocknen).

In einer bevorzugten Ausführungsform der Erfindung enthält die Zusammensetzung:
a) 0,001 - 10 Gew.-% eines Hydrophobins (H),
b) 5 - 50 Gew.-% eines Klebstoffes (K),
c) 40 - 90 Gew.-% eines Löse- und/oder Dispergiermittels (L),
d) 0 - 10 Gew.-% weiterer Zusatzstoffe (Z).

Statt eines einzelnen Hydrophobins (H) können auch zwei oder mehrere Hydrophobine zusammen eingesetzt werden. Statt eines einzelnen Klebstoffs (K) können auch zwei oder mehrere Klebstoffe zusammen eingesetzt werden.

Weiterhin bevorzugt sind Zusammensetzungen enthaltend:
a) 0,001 - 10 Gew.-% eines Hydrophobins (H),
b) 50 - 99,999 Gew.-% eines Klebstoffes (K),
c) 0 - 40 Gew.-% eines Löse- und/oder Dispergiermittels (L),
d) 0 - 10 Gew.-% weiterer Zusatzstoffe (Z).

In einer bevorzugten Ausführungsform der Erfindung weist die Zusammensetzung (z. B. bei der Verarbeitungstemperatur) eine dynamische Viskosität im Bereich von 500 bis 2000 mPas, bevorzugt eine Viskosität im Bereich von 500 bis 1000 mPas auf.

Unter dem Begriff "Hydrophobine" im Sinne der vorliegenden Erfindung sollen im Folgenden Polypeptide der allgemeinen Strukturformel (I)

Xₙ-C¹-X₁₋₅₀-C²-X₀₋₅-C³-X₁₋₁₀₀-C⁴-X₁₋₁₀₀-C⁶-X₁₋₅₀-C⁶-X₀₋₅-C⁷-X₁₋₅₀-C⁸-Xₘ (I)

verstanden werden, wobei X für jede der 20 natürlich vorkommenden Aminosäuren (Phe, Leu, Ser, Tyr, Cys, Trp, Pro, His, Gln, Arg, Ile Met, Thr, Asn, Lys, Val, Ala, Asp, Glu, Gly) stehen kann. Dabei können die Reste X jeweils gleich oder verschieden sein. Hierbei stellen die bei X stehenden Indizes jeweils die Anzahl der Aminosäuren in der jeweiligen Teilsequenz X dar, C steht für Cystein, Alanin, Serin, Glycin, Methionin oder Threonin, wobei mindestens vier der mit C benannten Reste für Cystein stehen, und die Indizes n und m stehen unabhängig voneinander für natürliche Zahlen zwischen 0 und 500, bevorzugt zwischen 15 und 300.

Die Polypeptide gemäß der Formel (I) sind weiterhin durch die Eigenschaft charakterisiert, dass sie bei Raumtemperatur nach Beschichten einer Glasoberfläche eine Vergrößerung des Kontaktwinkels eines Wassertropfens von mindestens 20°, bevorzugt mindestens 25° und besonders bevorzugt 30° bewirken, jeweils verglichen mit dem Kontaktwinkel eines gleich großen Wassertropfens mit der unbeschichteten Glasoberfläche.

Die mit C¹ bis C⁸ benannten Aminosäuren sind bevorzugt Cysteine. Sie können aber auch durch andere Aminosäuren ähnlicher Raumerfüllung, bevorzugt durch Alanin, Serin, Threonin, Methionin oder Glycin ersetzt werden. Allerdings sollen mindestens vier, bevorzugt mindestens 5, besonders bevorzugt mindestens 6 und insbesondere mindestens 7 der Positionen C¹ bis C⁸ aus Cysteinen bestehen. Cysteine können in den erfindungsgemäßen Proteinen entweder reduziert vorliegen oder miteinander Disulfidbrücken ausbilden. Besonders bevorzugt ist die intramolekulare Ausbildung von C-C Brücken, insbesondere die mit mindestens einer, bevorzugt 2, besonders bevorzugt 3 und ganz besonders bevorzugt 4 intramolekularen Disulfidbrücken. Bei dem oben beschriebenen Austausch von Cysteinen durch Aminosäuren ähnlicher Raumerfüllung werden vorteilhaft solche C-Positionen paarweise ausgetauscht, die intramolekulare Disulfidbrücken untereinander ausbilden können.

Falls in den mit X bezeichneten Positionen auch Cysteine, Serine, Alanine, Glycine, Methionine oder Threonine verwendet werden, kann sich die Nummerierung der einzelnen C-Positionen in den allgemeinen Formeln entsprechend verändern.

Bevorzugt werden Hydrophobine der allgemeinen Formel (II)

Xₙ-C¹-X₃₋₂₅-C²-X₀₋₂-C³-X₅₋₅₀-C⁴-X₂₋₃₅-C⁵-X₂₋₁₅-C⁶-X₀₋₂-C⁷-X₃₋₃₅-C⁸-Xₘ (II)

zur Ausführung der vorliegenden Erfindung eingesetzt, wobei X, C und die bei X und C stehenden Indizes die obige Bedeutung haben, die Indizes n und m für Zahlen zwischen 0 und 350, bevorzugt 15 bis 300 stehen, sich die Proteine weiterhin durch die oben erwähnte Kontaktwinkeländerung auszeichnen, und es sich weiterhin bei mindestens 6 der mit C benannten Reste um Cystein handelt. Besonders bevorzugt handelt es sich bei allen Resten C um Cystein.

Besonders bevorzugt werden Hydrophobine der allgemeinen Formel (III)

Xₙ-C¹-X₅₋₉-C²-C³-X₁₁₋₃₉-C⁴-X₂₋₂₃-C⁵-X₅₋₉-C⁶-C⁷-X₆₋₁₈-C⁸-Xₘ (III)

eingesetzt, wobei X, C und die bei X stehenden Indizes die obige Bedeutung haben, die Indizes n und m für Zahlen zwischen 0 und 200 stehen, sich die Proteine weiterhin durch die oben erwähnte Kontaktwinkeländerung auszeichnen, und es sich bei mindestens 6 der mit C benannten Reste um Cystein handelt. Besonders bevorzugt handelt es sich bei allen Resten C um Cystein.

Bei den Resten Xₙ und Xₘ kann es sich um Peptidsequenzen handeln, die natürlicherweise auch mit einem Hydrophobin verknüpft sind. Es kann sich aber auch bei einem oder bei beiden Resten um Peptidsequenzen handeln, die natürlicherweise nicht mit einem Hydrophobin verknüpft sind. Darunter sind auch solche Reste Xₙ und/oder Xₘ zu verstehen, bei denen eine natürlicherweise in einem Hydrophobin vorkommende Peptidsequenz durch eine nicht natürlicherweise in einem Hydrophobin vorkommende Peptidsequenz verlängert ist.

Falls es sich bei Xₙ und/oder Xₘ um natürlicherweise nicht mit Hydrophobinen verknüpfte Peptidsequenzen handelt, sind derartige Sequenzen in der Regel mindestens 20, bevorzugt mindestens 35 Aminosäuren lang. Es kann sich beispielsweise um Sequenzen aus 20 bis 500, bevorzugt 30 bis 400 und besonders bevorzugt 35 bis 100 Aminosäuren handeln. Ein derartiger, natürlicherweise nicht mit einem Hydrophobin verknüpfter Rest soll im Folgenden auch als Fusionspartner bezeichnet werden. Damit soll ausgedrückt werden, dass die Proteine aus mindestens einem Hydrophobinteil und einem Fusionspartnerteil bestehen können, die in der Natur nicht zusammen in dieser Form vorkommen. Fusions-Hydrophobine aus Fusionspartner und Hydrophobinteil sind beispielsweise in WO 2006/082251, WO 2006/082253 und WO 2006/131564 beschrieben.

Der Fusionspartnerteil kann aus einer Vielzahl von Proteinen ausgewählt werden. Es kann nur ein einziger Fusionspartner mit dem Hydrophobinteil verknüpft sein, oder es können auch mehrere Fusionspartner mit einem Hydrophobinteil verknüpft werden, beispielsweise am Aminoterminus (Xₙ) und am Carboxyterminus (Xₘ) des Hydrophobinteils. Es können aber auch beispielsweise zwei Fusionspartner mit einer Position (Xₙ oder Xₘ) des erfindungsgemäßen Proteins verknüpft werden.

Besonders geeignete Fusionspartner sind Proteine, die natürlicherweise in Mikroorganismen, insbesondere in Escherischia coli oder Bacillus subtilis vorkommen. Beispiele für solche Fusionspartner sind die Sequenzen yaad (SEQ ID NO: 16 in WO 2006/082251), yaae (SEQ ID NO:18 in WO 2006/082251), Ubiquitin und Thioredoxin. Gut geeignet sind auch Fragmente oder Derivate dieser genannten Sequenzen, die nur einen Teil, beispielsweise 70 bis 99%, bevorzugt 5 bis 50 %, und besonders bevorzugt 10 bis 40 % der genannten Sequenzen umfassen, oder bei denen einzelne Aminosäuren, bzw. Nukleotide gegenüber dergenannten Sequenz verändert sind, wobei sich die Prozentangaben jeweils auf die Anzahl der Aminosäuren bezieht.

Die Zuordnung der Sequenznamen zu DNA- und Polypeptidsequenz und die entsprechenden Sequenzprotokolle findet sich in der Anmeldung WO 2006/103225 (S. 13 der Beschreibung und Sequenzprotokoll).

In einer weiterhin bevorzugten Ausführungsform weist das Fusion-Hydrophobin neben dem genannten Fusionspartner als eine der Gruppen Xₙ oder Xₘ oder als terminaler Bestandteil einer solchen Gruppe noch eine so genannte Affinitätsdomäne (affinity tag / affinity tail) auf. Hierbei handelt es sich in prinzipiell bekannter Art und Weise um Ankergruppen, welche mit bestimmten komplementären Gruppen wechselwirken können und der leichteren Aufarbeitung und Reinigung der Proteine dienen können. Beispiele derartiger Affinitätsdomänen umfassen (His)ₖ-, (Arg)ₖ-, (Asp)ₖ-, (Phe)ₖ- oder (Cys)ₖ-Gruppen, wobei k im allgemeinen für eine natürliche Zahl von 1 bis 10 steht. Bevorzugt kann es sich um eine (His)ₖ-Gruppe handeln, wobei k für 4 bis 6 steht.

Hierbei kann die Gruppe Xₙ und/oder Xₘ ausschließlich aus einer derartigen Affinitätsdomäne bestehen oder aber ein natürlicherweise oder nicht natürlicherweise mit einem Hydrophobin verknüpfter Rest Xₙ bzw. Xₘ wird um eine terminal angeordnete Affinitätsdomäne verlängert.

Die erfindungsgemäß verwendeten Hydrophobine können auch noch in ihrer Polypeptidsequenz modifiziert sein, beispielsweise durch Glycosilierung, Acetylierung oder auch durch chemische Quervernetzung beispielsweise mit Glutardialdehyd.

Eine Eigenschaft der erfindungsgemäß verwendeten Hydrophobine bzw. deren Derivaten ist die Änderung von Oberflächeneigenschaften, wenn die Oberflächen mit den Proteinen beschichtet werden. Die Änderung der Oberflächeneigenschaften lässt sich experimentell beispielsweise dadurch bestimmen, dass der Kontaktwinkel eines Wassertropfens vor und nach der Beschichtung der Oberfläche mit dem Protein gemessen wird und die Differenz der beiden Messungen ermittelt wird.

Die Durchführung von Kontaktwinkelmessungen ist dem Fachmann prinzipiell bekannt. Die Messungen beziehen sich auf Raumtemperatur sowie Wassertropfen von 5 µl und die Verwendung von Glasplättchen als Substrat. Die genauen experimentellen Bedingungen für eine beispielhaft geeignete Methode zur Messung des Kontaktwinkels sind im experimentellen Teil dargestellt. Unter den dort genannten Bedingungen besitzen die erfindungsgemäß verwendeten Fusionsproteine die Eigenschaft, den Kontaktwinkel um mindestens 20°, bevorzugt mindestens 25°, besonders bevorzugt mindestens 30° zu vergrößern, jeweils verglichen mit dem Kontaktwinkel eines gleich großen Wassertropfens mit der unbeschichteten Glasoberfläche.

Besonders bevorzugte Hydrophobine zur Ausführung der vorliegenden Erfindung sind die Hydrophobine des Typs dewA, rodA, hypA, hypB, sc3, basf1, basf2. Diese Hydrophobine inklusive ihrer Sequenzen sind beispielsweise in WO 2006/082 251 offenbart. Sofern nicht anders angegeben, beziehen sich die nachfolgend angegebenen Sequenzen auf die in WO 2006/082 251 offenbarten Sequenzen. Eine Übersichtstabelle mit den SEQ-ID-Nummern befindet sich in WO 2006/082 251 auf Seite 20.

Erfindungsgemäß insbesondere geeignet sind die Fusionsproteine yaad-Xa-dewA-his (SEQ ID NO: 20), yaad-Xa-rodA-his (SEQ ID NO: 22) oder yaad-Xa-basf1-his (SEQ ID NO: 24) mit den in Klammern angegebenen Polypeptidsequenzen sowie den dafür codierenden Nukleinsäuresequenzen, insbesondere den Sequenzen gemäß SEQ ID NO: 19, 21, 23. Besonders bevorzugt wird das Hydrophobin yaad-Xa-dewA-his (SEQ ID NO: 20) eingesetzt.

Auch Proteine, die sich ausgehend von den in SEQ ID NO. 20, 22 oder 24 dargestellten Polypeptidsequenzen durch Austausch, Insertion oder Deletion von mindestens einer, bis hin zu 10, bevorzugt 5, besonders bevorzugt 5% aller Aminosäuren ergeben, und die die biologische Eigenschaft der Ausgangsproteine noch zu mindestens 50% besitzen, sind besonders bevorzugte Ausführungsformen. Unter biologischer Eigenschaft der Proteine wird hierbei die bereits beschriebene Änderung des Kontaktwinkels um mindestens 20° verstanden.

Besonders zur Ausführung der vorliegenden Erfindung geeignete Derivate sind von yaad-Xa-dewA-his (SEQ ID NO: 20), yaad-Xa-rodA-his (SEQ ID NO: 22) oder yaad-Xa-basf1-his (SEQ ID NO: 24) durch Verkürzung des yaad-Fusionspartners abgeleitete Derivate. Anstelle des vollständigen yaad-Fusionspartners (SEQ ID NO: 16) mit 294 Aminosäuren kann vorteilhaft ein verkürzter yaad-Rest eingesetzt werden. Der verkürzte Rest sollte aber zumindest 20, bevorzugt mindestens 35 Aminosäuren umfassen. Beispielsweise kann ein verkürzter Rest mit 20 bis 293, bevorzugt 25 bis 250, besonders bevorzugt 35 bis 150 und beispielsweise 35 bis 100 Aminosäuren eingesetzt werden. Ein Beispiel für ein derartiges Protein ist yaad40-Xa-dewA-his (SEQ ID NO: 26 in PCT/EP2006/064720), welches einen auf 40 Aminosäuren verkürzten yaad-Rest aufweist. Eine Spaltstelle zwischen dem Hydrophobin und dem Fusionspartner bzw. den Fusionspartnern kann dazu genutzt werden, den Fusionspartner abzuspalten und das reine Hydrophobin in underivatisierter Form freizusetzen (beispielsweise durch BrCN-Spaltung an Methionin, Faktor Xa-, Enterokinase-, Thrombin-, TEV-Spaltung etc.).

Die in der erfindungsgemäßen Zusammensetzung zum Verkleben von Papiererzeugnissen enthaltenen Hydrophobine lassen sich chemisch durch bekannte Verfahren der Peptidsynthese, wie beispielsweise durch Festphasensynthese nach Merrifield herstellen. Natürlich vorkommende Hydrophobine lassen sich aus natürlichen Quellen mittels geeigneter Methoden isolieren. Beispielhaft sei auf Wösten et. al., Eur. J. Cell. Bio. 63, 122-129 (1994) oder WO 1996/41882 verwiesen. Ein gentechnisches Herstellverfahren für Hydrophobine ohne Fusionspartner aus Talaromyces thermophilus ist von US 2006/0040349 beschrieben.

Die Herstellung von Fusionsproteinen kann bevorzugt durch gentechnische Verfahren erfolgen, bei denen eine für den Fusionspartner und eine für den Hydrophobinteil codierende Nukleinsäuresequenz, insbesondere DNA-Sequenz, so kombiniert werden, dass in einem Wirtsorganismus durch Genexpression der kombinierten Nukleinsäuresequenz das gewünschte Protein erzeugt wird. Ein derartiges Herstellverfahren beispielsweise ist von WO 2006/082251 oder WO 2006/082253 offenbart. Die Fusionspartner erleichtern die Herstellung der Hydrophobine erheblich. Fusions-Hydrophobine werden bei den gentechnischen Verfahren mit deutlich besseren Ausbeuten produziert als Hydrophobine ohne Fusionspartner.

Die nach dem gentechnischen Verfahren von den Wirtsorganismen produzierten Fusions-Hydrophobine können in prinzipiell bekannter Art und Weise aufgearbeitet und mittels bekannter chromatographischer Methoden gereinigt werden. In einer bevorzugten Ausführungsform kann das in WO 2006/082253, Seiten 11/12 offenbarte, vereinfachte Aufarbeitungs- und Reinigungsverfahren eingesetzt werden. Hierzu werden die fermentierten Zellen zunächst aus der Fermetationsbrühe abgetrennt, aufgeschlossen und die Zelltrümmer von den Einschlusskörpern (inclusion bodies) getrennt. Letzteres kann vorteilhaft durch Zentrifugieren erfolgen. Schließlich können die Einschlusskörper, beispielsweise durch Säuren, Basen und/oder Detergentien in prinzipiell bekannter Art und Weise aufgeschlossen werden, um die Fusions-Hydrophobine freizusetzen. Die Einschlusskörper mit den erfindungsgemäß verwendeten Fusion-Hydrophobinen können in der Regel schon unter Verwendung von 0,1 m NaOH innerhalb von ca. 1 h vollständig gelöst werden.

Die erhaltenen Lösungen können - ggf. nach Einstellen des gewünschten pH-Wertes - ohne weitere Reinigung zur Ausführung dieser Erfindung eingesetzt werden. Die Fusions-Hydrophobine können aus den Lösungen aber auch als Feststoff isoliert werden. Bevorzugt kann die Isolierung mittels Sprühgranulieren oder Sprühtrocknen erfolgen, wie in WO 2006/082253, Seite 12 beschrieben wird. Die nach dem vereinfachten Aufarbeitungs- und Reinigungsverfahren erhaltenen Produkte umfassen neben Resten von Zelltrümmern in der Regel ca. 80 bis 90 Gew.-% Proteine. Die Menge an Fusions-Hydrophobinen beträgt je nach Fusionskonstrukt und Fermentationsbedingungen in der Regel 30 bis 80 Gew.-% bezüglich der Menge aller Proteine.

Die isolierten, Fusions-Hydrophobine enthaltenden Produkte können als Feststoffe gelagert werden und zum Einsatz in den jeweils gewünschten Medien gelöst werden.

Die Fusions-Hydrophobine können als solche oder auch nach Abspaltung und Abtrennung des Fusionspartners als "reine" Hydrophobine zur Ausführung dieser Erfindung verwendet werden. Eine Spaltung nimmt man vorteilhaft nach der Isolierung der Einschlusskörper und deren Auflösung vor.

In einer bevorzugten Ausführungsform der Erfindung handelt es sich bei dem eingesetzten Hydrophobin (H) um mindestens ein Fusions-Hydrophobin mit einer Polypeptidsequenz ausgewählt aus der Gruppe von SEQ ID NO:20; SEQ ID NO 22; SEQ ID NO 24.

Die oben beschriebene erfindungsgemäße Zusammensetzung enthält Hydrophobin in einem Bereich von 0,001 bis 10 Gew.-% (bezogen auf die Gesamtzusammensetzung), bevorzugt im Bereich von 0,005 bis 10 Gew.-%, besonders bevorzugt im Bereich von 0,01 bis 5 Gew.-%, ganz besonders bevorzugt im Bereich von 0,01 bis 1 Gew.-%.

In einer bevorzugten Ausführungsform enthält die Zusammensetzung zum Verkleben von Papiererzeugnissen mindestens ein Hydrophobin (Komponente H) im Bereich von 0,001 bis 0,1 Gew.-%.

Unter der in der erfindungsgemäßen Zusammensetzung enthaltenen Komponente K kann ganz allgemein ein Klebstoff (vergleich DIN EN 923) verstanden werden, d.h. ein nichtmetallischer Stoff, der Fügeteile durch Flächenhaftung (Adhäsion) und innere Festigkeit (Kohäsion) miteinander verbinden kann. Klebstoffe können physikalisch abbindende Klebstoffe (beispielsweise Schmelzklebstoffe, Dispersions-Klebstoffe oder Leime) oder chemisch abbindende Klebstoffe (Reaktiv-Klebstoffe), wie beispielsweise Polyurethan-Klebstoffe darstellen.

In einer bevorzugten Ausführungsform der Erfindung enthält die Zusammensetzung zum Verkleben von Papiererzeugnissen mindestens einen Klebestoff (K), der in der Papier- und Druckweiterverarbeitung üblicherweise eingesetzt wird. Im Folgenden sind nicht abschließend solche üblicherweise in der Druckweiterverarbeitung eingesetzten Klebstoffe aufgelistet:
• Klebstoffe auf Basis von natürlichen oder halbnatürlichen Polymeren,
   Stärkeklebstoffe, enthaltend Kartoffel-, Mais-, Weizen-, Manioka-, Tapioka- und Reisstärke in nativer oder abgebauter Form, in verschiedenen Abbaugraden, in kalt- oder warmlöslicher Form, mit verschieden eingestellten Verkleisterungsgraden,
   Dextrinklebstoffe, hergestellt durch thermischen oder chemischen Abbau von Kartoffel-, Mais-, Weizen-, Manioka-, Tapioka- und Reisstärke;
   Glutinleime,
   Stärke/Dextrin-Mischleime,
   Cellulose-Klebstoffe, Cellulose-Derivat-Klebstoffe.
• Klebstoffe auf Basis von synthetischen Polymeren, wie beispielsweise
   Schmelzklebstoffe beispielsweise auf Vinylacetat-Basis (Hot-melt-Klebstoffe),
   Reaktive Polyurethan-Schmelzklebstoffe (PUR-Reaktivklebstoffe),
   Polyvinylalkohol-Klebstoffe,
   oder Dispersions-Klebstoffe enthaltend Homo- oder Copolymere aus Vinylacetat, Ethylvinylacetat, Acrylaten, Styrol-Acrylat sowie Dispersions-Klebstoffe enthaltend Polyurethan.

Hierbei ist unter Dispersions-Klebstoffe im Sinne der Erfindung eine Dispersion eines organischen Grundstoffes (beispielsweise einem Polymer bzw. Copolymer aus Vinylester oder Acrylaten) in flüssigen Dispersionsmitteln, in denen der organische Grundstoff unlöslich ist, zu verstehen. Die Dispersionen können gegebenenfalls noch Weichmacher, Harze oder Füllstoffe enthalten. Dispersions-Klebstoffe auf wässriger Basis enthalten Wasser als Hauptbestandteil des Dispersionsmittels.

In einer bevorzugten Ausführungsform der Erfindung besteht die Klebstoff-Komponente (K) der Zusammensetzung aus einem Dispersions-Klebstoff insbesondere auf wässriger Basis. Insbesondere bevorzugt werden Dispersions-Klebstoffe enthaltend Homo- oder Copolymere aus Vinylacetat, Ethylvinylacetat, Acrylaten, Styrol-Acrylat oder ein Polyurethan.

Ganz besonders bevorzugt enthält die Klebstoff-Komponente K mindestens einen der folgenden Dispersions-Klebstoffe:
- Emuldur^{®} (BASF, Ludwigshafen, Deutschland), (anionisches PolyesterPolyurethan in wässriger Dispersion),
- Adhesin^{®}A7362 (Henkel, Düsseldorf, Deutschland), (Polyvinylacetat),
- Acronal^{®}A508 (BASF, Ludwigshafen, Deutschland), (Acrylsäureester-Copolymer-Dispersion).

Die erfindungsgemäße Zusammensetzung kann gegebenenfalls 0-90 Gew.-% eines (oder auch mehrerer) Löse- und/oder Dispergiermittel (L) enthalten, wobei bevorzugt Wasser eingesetzt wird.

Es können jedoch auch andere polare, wassermischbare Löse- und/oder Dispergiermittel wie Alkohole (z.B. Methanol, Ethanol, n-Propanol, n-Butanol, Isopropanol, Cyclohexanol); Carbonsäuren (z.B. Ameisensäure, Essigsäure); Carbonsäureestern (z.B. Essigsäureethylester), Ketone (z.B. Aceton) eingesetzt werden. Es können als Komponente (L) auch Mischungen verschiedener Löse- und/oder Dispergiermittel eingesetzt werden. Weiterhin ist denkbar, dass das Löse- und/oder Dispergiermittel (L) auch unpolare Lösungsmittel enthält. Unter die Definition des Löse- und/oder Dispergiermittels (L) fallen beispielsweise Dispergiermittel eines Dispersions-Klebstoffes und Lösemittel der Hydrophobin-Komponente.

Die erfindungsgemäße Zusammensetzung kann gegebenenfalls weitere Zusatzstoffe (Z) enthalten z. B. solche, die in Klebstoff-Zusammensetzungen für die Druckweiterverarbeitung gängigerweise enthalten sind. Hier sind beispielsweise zu nennen:
a) Weichmacher,
b) Füllstoffe,
c) Konservierungsmittel,
d) Lichtschutzmittel,
e) Entschäumungsmittel,
f) Rheologieverbesserer, beispielsweise
   Luphen^{®}D200A von BASF, Ludwigshafen, DE
   Emuldur^{®}DS2360 von BASF, Ludwigshafen, DE
   Impranil^{®}DLP-R von Bayer-Leverkusen, DE
g) Verdickungsmittel, beispielsweise
   Borchigel^{®}0435 von Fa. Borchers, Langenfeld, DE

In einer besonderen Ausführungsform der Erfindung enthält die erfindungsgemäße Zusammensetzung als "weiteren Zusatzstoff" (Z) mindestens ein Benetzungsmittel im Bereich von 0,0001 bis 10 Gew.-%, insbesondere im Bereich von 0,0001 bis 1 Gew.-%, bevorzugt im Bereich von 0,0001 bis 0,1 Gew.-% (jeweils bezogen auf die Gesamtzusammensetzung).

Ein Benetzungsmittel stellt im Sinne der Erfindung ein Tensid, d.h. eine grenzflächenaktive Substanz, dar, das die Oberflächenspannung einer Flüssigkeit, in der das Tensid gelöst ist oder die Grenzflächenspannung zu einer zweiten flüssigen Phase, herabsetzt. Ein Benetzungsmittel (im Folgenden auch kurz als Netzmittel bezeichnet) unterstützt insbesondere die Benetzung einer Oberfläche durch die Flüssigkeit, in der das Benetzungsmittel gelöst ist.

Das Benetzungsmittel kann insbesondere ausgewählt sein aus der Gruppe bestehend aus: ethoxylierten Alkoholen, ethoxylierten Säuren (wie ethoxylierten Carbonsäuren, ethoxylierten Fettsäuren), Siloxanen, modifizierten (z.B. polyethermodifizierten) Siloxanen, insbesondere Trisiloxanen, ionischen Tensiden, insbesondere aber auch anionischen Tensiden und hochdispersen Kieselsäuren.

Als ethoxylierte Alkohole (Alkylpolyethylenglykole) können insbesondere Anlagerungsprodukte von 0 bis 30 Mol Ethylenoxid, insbesondere 10 bis 25, insbesondere 12 bis 20 Mol Ethylenoxid, und/oder 0 bis 5 Mol Propylenoxid an lineare Fettalkohole mit 8 bis 22 C-Atomen (z.B. Stearylalkohole, Cetylalkohole), eingesetzt werden. Bevorzugt können Alkylpolyethylenglykole ausgewählt werden aus der Gruppe bestehend aus Polyethylenglycol(12 bis 20)stearylether, Polyethylenglycol(12 bis 20)isostearylether, Polyethylenglycol(12 bis 20)cetylether, Polyethylenglycol(12 bis 20)isocetylether, Polyethylenglycol(12 bis 20)oleylether, Polyethylenglycol(12 bis 20)laurylether, Polyethylenglycol(12 bis 20)isolaurylether und Polyethylenglycol(12 bis 20) cetylstearylether.

Weiterhin ist der Einsatz von Anlagerungsprodukte von 0 bis 30 Mol Ethylenoxid und/oder 0 bis 5 Mol Propylenoxid an Alkylphenole mit 8 bis 15 C-Atomen in der Alkylgruppe als Tensid (Benetzungsmittel) möglich, insbesondere Octylphenolpolyethylenglycolether (Triton®).

In einer weiteren Ausführungsform können als Benetzungsmittel Fettsäureethoxylate (Acylpolyethylenglykole), insbesondere Anlagerungsprodukte von 0 bis 30 Mol Ethylenoxid, insbesondere 10 bis 25, insbesondere 12 bis 25 Mol Ethylenoxid, und/oder 0 bis 5 Mol Propylenoxid an lineare Fettsäuren mit 8 bis 22 C-Atomen (z.B. Stearinsäure, Isostearinsäure, Ölsäure) eingesetzt werden. Insbesondere kann ein (oder mehrere) Fettsäureethoxylat eingesetzt werden, ausgewählt aus der Gruppe bestehend aus Polyethylenglycol(12 bis 25)stearat, Polyethylenglycol(12 bis 20) isostearat, Polyethylenglycol(12 bis 25)oleat.

Weiterhin ist der Einsatz von Glycerinmono- und -diester von gesättigten und ungesättigten Fettsäuren mit 6 bis 22 Kohlenstoffatomen und gegebenenfalls deren Ethylenoxidanlagerungsprodukten von 0 bis 30 Mol Ethylenoxid, insbesondere 10 bis 25, insbesondere 12 bis 25, möglich. Hier kann insbesondere ein Tensid eingesetzt werden ausgewählt aus der Gruppe Polyethylenglycol(20) glyceryllaurat, Polyethylenglycol(6)glycerylcaprat/caprinat, Polyethylenglycol(20)glyceryloleat, Polyethylenglycol(20) glycerylisostearat und Polyethylenglycol(18)glyceryloleat/cocoat.

Ebenfalls geeignet sind Sorbitanmono- und -diester von gesättigten und ungesättigten Fettsäuren mit 6 bis 22 Kohlenstoffatomen und gegebenenfalls deren Ethylenoxidanlagerungsprodukten von 0 bis 30 Mol Ethylenoxid , insbesondere 10 bis 25 Mol, insbesondere 12 bis 25 Mol. Bevorzugt können ethoxylierte Sorbitanfettsäureester ausgewählt aus der Gruppe Polyethylenglykol(20) sorbitanmonolaurat (Tween ®20), Polyethylenglycol(20)sorbitanmonostearat, Polyethylenglycol(20)sorbitanmonoisostearat, Polyethylenglycol(20)sorbitanmonopalmitat und Polyethylenglycol(20)sorbitan-monooleat als Tensid (Benetzungsmittel) zum Einsatz kommen.

Ebenfalls als Tensid (Benetzungsmittel) zum Einsatz kommen können ethoxylierte Fettamine, Fettsäureamide, Fettsäure-alkanolamide, Fettsäureamidpolyethylenglykole, Polypropylenglykolethoxylate (Poloxamere, Pluronics®); Fettsäure-N- methylglucamide, Saccharoseester; Polyglykolether, Alkylpolyglycoside, Phosphorsäureester (Mono-, Di- und Triphosphorsäureester ethoxyliert und nicht- ethoxyliert).

Als Benetzungsmittel können auch ionogene Tenside, bevorzugt anionische Tenside, wie mono-, di- oder tri-Phosphorsäureester, Natriumstearat, Natriumlaurylsulfat, Natriumlaurylsarcosinat, Natriumdioctylsulfosuccinat, Natriumdiisooctylsulfosuccinat (z.B. Emulsogen®SF8), Natriumalkylnaphtalinsulfonat, Fettalkoholsulfate, Alkylethersulfat (z.B. Lauryldiglycolethersulfat-Natriumsalz), ethoxylierte Alkylethercärbonsäure oder deren Salze (z.B. Natrium-laureth(11 EO)-carboxylat) eingesetzt werden. Weiterhin ist aber auch der Einsatz von kationischen Tensiden wie mono-, di- und tri- Alkylquats und deren polymere Derivate, möglich.

In einer weiteren Ausführungsform werden Siloxane und/oder ein modifiziertes Siloxan als Tensid (Benetzungsmittel) eingesetzt. Bei den Siloxanen kann es sich insbesondere um oligomere oder polymere Siloxane und/oder modifizierte Siloxane handeln. Es können beispielsweise oligomere und/oder polymere Siloxane eingesetzt werden, welche durch Alkyl-, Vinyl- oder Aminogruppen modifiziert sind. Bevorzugt ist weiterhin der Einsatz von polyethermodifizierten Siloxanen, wie z.B. einem polyethermodifizierten Trimethoxysilan (Dynsylan®4144). Insbesondere bevorzugt ist der Einsatz von polyethermodifizierten Trisiloxanen. Bevorzugte polyethermodifizierte Siloxane sind durch Umsetzung von linearen oder cyclischen optional modifizierten Mono-, Oligo- und/oder Polysiloxanen mit Ethylenoxid und/oder Propylenoxid erhältlich. Insbesondere können als polyethermodifizierte Siloxane Anlagerungsprodukte von 0 bis 30 Mol Ethylenoxid, insbesondere 10 bis 25 Mol, insbesondere 12 bis 20 Mol und/oder 0 bis 5 Mol Propylenoxid an lineare und/oder cyclische Mono-, Oligo- und/oder Polysiloxane eingesetzt werden, bevorzugt Trisiloxane.

Weiterhin ist der Einsatz von Siloxanen möglich, ausgewählt aus der Gruppe Heptamethyltrisiloxan, Lauryltrisiloxan und Stearyltrisiloxan. Weiterhin können amino-, alkyl- und/oder vinyl modifizierte Siloxane und/oder Oligosiloxane (z.B. Tenside der Marken Dynasyllan® und Dynasyllan®Hydrosil) zum Einsatz kommen.

In einer bevorzugten Ausführungsform der Erfindung enthält die beschriebene Zusammensetzung als weiteren Zusatzstoff (Z) mindestens ein Tensid (Benetzungsmittel) im Bereich von 0,0001 bis 10 Gew.%, insbesondere im Bereich von 0,0001 bis 1 Gew%, bevorzugt im Bereich von 0,0001 bis 0,1 Gew.%, ausgewählt aus der Gruppe bestehend aus polyethermodifizierten Trisiloxan (z.B. BreakTru®, Dynasyl®4144), alkyl-modifizierten Siloxanen, amino-modifizierten Siloxanen, amino-/alkyl modifizierten Siloxanen (z.B. Dynasyl®Hydrosil2627), Heptamethyltrisiloxan (Silwet® L-77), Polyoxyethylen(20)-sorbitan-monolaurat (Polysorbat 20, Tween®20), Octylphenol-polyethylenglycol(9 bis 10)ether (Triton®), Polyethylenglycol(12 bis 20)stearylether, Polyethylenglycol(12 bis 20)laurylether und Polyethylenglycol(12 bis 20) cetylether.

In einer bevorzugten Ausführungsform werden Mischungen von zwei oder mehreren der oben genannten Netzmittel in der Zusammensetzung eingesetzt. In einer besonders bevorzugten Ausführungsform der Erfindung enthält die Zusammensetzung zum Verkleben von Papiererzeugnissen folgende Komponenten (bzw. besteht bevorzugt aus diesen):
a) 0,001 - 1 Gew.-% eines Hydrophobins (H),
b) 5 - 99,999 Gew.-% eines Dispersions-Klebstoffes (K),
c) 0 - 90 Gew.-% eines Löse- und/oder Dispergiermittels (L), enthaltend Wasser,
d) 0 - 10 Gew.-% weiterer Zusatzstoffe (Z).

Ganz besonders bevorzugt sind Zusammensetzungen enthaltend folgende Komponenten (bzw. besteht bevorzugt aus diesen):
a) 0,001 - 1 Gew.-% mindestens eines Fusions-Hydrophobins (H) mit einer Polypeptid-Sequenz ausgewählt aus der Gruppe SEQ ID NO:20; SEQ ID NO 22 oder SEQ ID NO 24.
b) 5 - 99,999 Gew.-% eines Klebstoffes (K), ausgewählt aus der Gruppe Acrylat- Dispersions-Klebstoffe, Acrylat-Stryrol-Dispersions-Klebstoffe oder wässrige Polyurethan-Klebstoffe.
c) 0 - 95 Gew.-% Wasser (L)
d) 0 - 10 Gew.-% weiterer Zusatzstoffe (Z).

Es ist weiterhin möglich, dass die Zusammensetzung aus mindestens zwei Teilen besteht, die getrennt hergestellt, geliefert und auf das Papiererzeugnis aufgebracht werden. Die Teile umfassen mindestens einen Klebstoff (Komponente K) und ein Hydrophobin (Komponente H). Bevorzugt umfassen die Teile einen wässrigen Dispersions-Klebstoff (K) und eine wässrige Lösung mindestens eines Hydrophobins.

Unter Papiererzeugnissen im Sinne der vorliegenden Erfindung sind insbesondere grafische Papiere, Verpackungspapiere, Hygienepapiere und Spezialpapiere zu verstehen. Als grafische Papiere im Sinne der Erfindung sind alle Papiere zum Bedrucken, Beschreiben und Kopieren anzusehen, z.B. Fotodrucke und Digitaldrucke. Unter Verpackungspapieren sind Papiere, Karton und Pappe für Verpackungszwecke zu verstehen. Hygienepapiere im Sinne der Erfindung sind Papiere mit hohem Volumen und hoher Saugkraft, die typischerweise im Sanitär- oder Küchenbereich Anwendung finden. Der Ausdruck Spezialpapiere bezeichnet Papiere und Pappen für spezielle technische Verwendungszwecke.

Bevorzugt bezieht sich die Erfindung auf grafische Papiere. Besonders bevorzugt bezieht sich die Erfindung auf graphische Papiere, welche bereits einen Druckprozess unterworfen wurden, insbesondere auf Fotodrucke und Digitaldrucke. Es können aber auch nicht bedruckte Papiere im Rahmen der Erfindung verwendet werden.

Unter Papiererzeugnisse fallen im Rahmen der Erfindung auch Produkte, die durch das Zusammenfügen von oben genannten Papiererzeugnissen entstanden sind, also beispielsweise Produkte oder Zwischenprodukte der Buchbinderei, wie Bücher, Broschüren, Kataloge, Schreibblöcke, Buchblöcke, Umschläge.

Die vorliegende Erfindung umfasst weiterhin ein Verfahren zum Verkleben eines Papiererzeugnisses, wobei die Komponenten der oben beschriebenen Zusammensetzung auf das Papiererzeugnis aufgebracht werden.

In einer bevorzugten Ausführungsform des Verfahrens wird auf das Papiererzeugnis zunächst eine Zusammensetzung enthaltend mindestens ein Hydrophopin (H) und daran anschließend eine Zusammensetzung enthaltend den Klebstoff (K) aufgetragen (zweistufiges Verfahren)

In einer weiteren bevorzugten Ausführungsform werden die Komponenten der oben beschriebenen Zusammensetzung gemischt und auf ein Papiererzeugnis aufgetragen. Bevorzugt werden Zusammensetzungen enthaltend mindestens ein Hydrophobin (H), einen Klebstoff (K), gegebenenfalls ein Löse- und/oder Dispergiermittel (L) und gegebenenfalls weitere Zusatzstoffe mit den oben beschrieben Gewichtsanteilen eingesetzt (einstufiges Verfahren).

In einer bevorzugten einstufigen Ausführungsform wird eine wässrige Lösung mindestens eines Hydrophobins (H) mit einem wässrigen Dispersionsklebstoff (K) und gegebenenfalls weiteren Zusatzstoffen (Z) vermischt und auf das Papiererzeugnis aufgetragen. Es können (gegebenenfalls gereinigte) Hydrophobin-Lösungen eingesetzt werden, wie sie bei einem der beschriebenen Herstellungsverfahren für Hydrophopin anfallen. Die so erhaltene Zusammensetzung wird in einer geeigneten gängigen Auftragsvorrichtung auf das Druckerzeugnis aufgetragen.

In der zweistufige Ausführung des Verfahrens werden zunächst die Lösung des Hydrophobins (H) im Löse- und/oder Dispergiermittel (bevorzugt Wasser) und anschließend in einem zweiten Schritt der Klebstoff gegebenenfalls enthaltend ein Löse- und/oder Dispergiermittel (L) und weitere Zusatzstoffen (Z) auf das zu klebende Papiererzeugnis aufgetragen.

Insbesondere werden Hydrophobin-Lösungen mit einem Hydrophobin-Gehalt im Bereich von 0,001 bis 10 Gew.-%, bevorzugt im Bereich von 0,005 bis 10 Gew.-%, besonders bevorzugt im Bereich von 0,01 bis 5 Gew.-% und ganz besonders bevorzugt im Bereich von 0,01 bis 1 Gew.% eingesetzt. In einer weiteren Ausführungsform der Erfindung werden verdünnte Hydrophobin-Lösungen mit einem Hydrophobin-Gehalt von 0,001 bis 0,1 Gew.-% aufgetragen.

Als Lösemittel können die vorne genannten Löse- und/oder Dispergiermittel einzeln oder als Mischungen, bevorzugt jedoch Wasser eingesetzt werden.

In einer besonderen Ausführungsform der Erfindung werden auf das Papiererzeugnis zunächst eine wässrige Lösung enthaltend 0,001 bis 10 Gew. % bevorzugt 0,005 bis 10 Gew.-%, besonders bevorzugt 0,01 bis 5 Gew.-%, ganz besonders bevorzugt im Bereich von 0,01 bis 1 Gew.-% mindestens eines Hydrophobins (H) und daran anschließend eine Zusammensetzung enthaltend den Klebstoff (K) aufgetragen. In einer weiterhin bevorzugten Ausführungsform wird eine wässrige Lösung enthaltend 0,001 bis 0,1 Gew.-% mindestens ein Hydrophobins (Komponente H) auf das Papiererzeugnis aufgebracht.

Gegebenfalls kann das Papiererzeugnis nach dem Auftragen der Hydrophopin-Lösung und vor dem Auftragen einer Klebstoff-Komponente getrocknet werden ("two-shot-Verfahren").

Bevorzugt erfolgt der Auftrag ohne Zwischentrocknung, d.h. "nass-in-nass". Hierbei wird eine Hydrophobin enthaltende Lösung auf das Papiererzeugnis aufgetragen und unmittelbar im Anschluss daran auf die feuchten Fasern eine Klebstoff-Komponente beispielsweise über eine Düse aufgetragen.

In einer besonders bevorzugten Ausführungsform der Erfindung werden zunächst auf das Papiererzeugnis eine wässrige Lösung enthaltend 0,001 bis 10 Gew. % mindestens eines Hydrophobins (H) und daran unmittelbar anschließend ohne Zwischentrocknung ("nass-in-nass") ein wässriger Dispersionsklebstoff (K) aufgetragen, wobei es sich bei dem Hydrophobin um ein Fusions-Hydrophobin mit einer Polypeptidsequenz ausgewählt aus der Gruppe von SEQ ID NO:20; SEQ ID NO 22; SEQ ID NO 24 handelt, und wobei es sich bei dem Papiererzeugnis um einen Buchblockrücken handelt.

Insbesondere ist auch ein wie oben beschriebenes zweistufiges Verfahren bevorzugt, bei dem die oben beschriebene Hydrophobinlösung als weiteren Zusatzstoff (Z) mindestens ein Benetzungsmittel im Bereich von 0,0001 bis 10 Gew.%, bevorzugt im Bereich von 0,001 bis 10 Gew.%, weiterhin bevorzugt im Bereich von 0,005 - 10 Gew.%, insbesondere bevorzugt im Bereich von 0,01 bis 5 Gew.%, besonders bevorzugt im Bereich von 0,01 - 1 Gew.%. In einer Ausführungsform enthält die Hydrophobinlösung als weiteren Zusatzstoff (Z) mindestens ein Benetzungsmittel im Bereich von 0,0001 bis 0,1 Gew.-%. Die genannten Gew.% Angaben sind bezogen auf die Gesamtmenge an wässriger Hydrophobin-Lösung.

Hierbei können insbesondere die oben genannten Benetzungsmittel eingesetzt werden. Bevorzugt wird als weiterern Zusatzstoff (Z) mindestens ein Tensid (Benetzungsmittel) ausgewählt aus der Gruppe bestehend aus polyethermodifizierten Trisiloxan (z.B. BreakTru®, Dynasyl®4144), alkyl-modifizierten Siloxanen, amino-modifizierten Siloxanen, amino-/alkyl modifizierten Siloxanen (z.B. Dynasyl®Hydrosil2627), Heptamethyltrisiloxan (Silwet® L-77), Polyoxyethylen(20)-sorbitan-monolaurat (Polysorbat 20, Tween®20), Octylphenol-polyethylenglycol(9 bis 10)ether (Triton®), Polyethylenglycol(12 bis 20)stearylether, Polyethylenglycol(12 bis 20)laurylether und Polyethylenglycol(12 bis 20) cetylether.

In einer bevorzugten Ausführungsform werden Mischungen von zwei oder mehreren, insbesondere 2 bis 5, der oben genannten Netzmittel eingesetzt.

In einer Ausführungsform der Erfindung kann eine oben beschriebene Hydrophobin-Lösung in einem zweistufiges Verfahren wie in der vorliegenden Anmeldung beschrieben eingesetzt werden, wobei die Hydrophobinlösung eine Oberflächenspannung im Bereich von 10 bis 50 mN/m, insbesondere im Bereich von 20 bis 40 mN/m, häufig auch im Bereich von 30 bis 35 mN/m aufweist. Die Oberflächenspannung der Hydrophobinlösung ist für bestimmte Anwendungsbereiche von Bedeutung und kann auch durch die Art und Menge des zusätzlich eingesetzten Benetzungsmittels gezielt eingestellt werden.

Auch in dieser Ausführungsform können getrocknete Hydrophobine oder (gegebenenfalls gereinigten) Hydrophobin-Lösungen eingesetzt werden, wie sie bei einem der beschriebenen Herstellungsverfahren für Hydrophobin anfallen.

Der Auftrag kann insbesondere mit Hilfe eines bekannten manuellen oder maschinellen Verfahrens, wie beispielsweise dem Düsen- oder Walzenauftrag erfolgen.

Dabei erfolgt der Auftrag der erfindungsgemäßen Zusammensetzung vorzugsweise in einer Bindemaschine für Dispersions-Klebstoffe (so genannte Kaltleime) mit einem Düsenauftrags-System. Bevorzugt erfolgt vor dem Auftragsprozess ein Schritt zur Buchblockrücken-Bearbeitung, bei dem die Fasern der Blattkanten freigelegt werden.

Die Erfindung umfasst darüber hinaus die Verwendung von mindestens einem Hydrophobin in einem Verfahren zum Verkleben von Papiererzeugnissen.

Die Erfindung umfasst darüber hinaus die Verwendung von mindestens einem Hydrophobin als Hilfsstoff in Zusammensetzungen zum Verkleben von Papiererzeugnissen bei der Druckweiterverarbeitung.

Eine bevorzugte Ausführungsform der Erfindung umfasst die Verwendung von mindestens einem Hydrophobin wie oben beschrieben, wobei das Hydrophobin als Hilfsstoff in wässrigen Klebstoffen bei der Druckweiterverarbeitung eingesetzt wird. Die Verwendung bei der Buchbinderei und insbesondere dem Klebebinden von Buchblöcken ist besonders bevorzugt.

Vorzugsweise wird mindestens ein Hydrophobin erfindungsgemäß als Hilfsstoff in wässrigen Dispersions-Klebstoffen bei der Druckweiterverarbeitung, bevorzugt beim Klebebinden von Druckerzeugnissen, insbesondere von Druckerzeugnissen des Digital- oder Fotodrucks, eingesetzt.

Ganz besonders bevorzugt ist die Verwendung eines Fusionsprotein mit einer Polypeptidsequenz ausgewählt aus der Gruppe von SEQ ID NO:20; SEQ ID NO 22; SEQ ID NO 24 als Hilfsstoff in wässrigen Dispersionen beim Klebebinden von Papiererzeugnissen.

Die erfindungsgemäße Zusammensetzung wird vorzugsweise als Klebstoffsystem in allen Schritten der Druckweiterverarbeitung angewendet. Der Begriff Druckweiterverarbeitung umfasst alle Arbeitsschritte, durch welche aus den bedruckten (oder auch unbedruckten) Vorprodukten die vorgesehenen Produkte mit ihren jeweiligen Formen und Eigenschaften gefertigt werden Insbesondere sind im Sinne der Erfindung Verfahren und Schritte der Buchbinderei zu verstehen, welche eine Verklebung beinhalten. Hier seinen beispielhaft folgende Anwendungen genannt:
Klebebinden von Büchern, Broschüren, Katalogen, Schreibblocks; Ableimen, Blockleimen, Einhängen von Buchblocks, Ankleben von Umschlägen, Buchdeckenherstellung, Vorsatzklebung, Rückenableimung, Seitenbeleimung, Hinterkleben, Einkleben von Karten und Warenproben, Kaschieren, Gummierung, Selbstklebegummierung, Haftklebegummierung, Etikettenherstellung.

Die Erfindung betrifft weiterhin Papiererzeugnisse, wie beispielsweise Bücher, Broschüren, Schreibblöcken, welche mit einer erfindungsgemäßen, oben beschriebenen Zusammensetzung verklebt wurden.

Die Erfindung bezieht sich insbesondere auf Erzeugnisse der Buchbinderei, wie Bücher, Broschüren, Kataloge, Kalender, Schreibblocks oder ähnliche Druckartikel, welche mit einer erfindungsgemäßen, oben beschriebenen Zusammensetzung gebunden wurden.

Die folgenden Beispiele sollen die Erfindung näher illustrieren:

### Beispiel 1: Herstellung der Hydrophobine

Für die Beispiele wurden ein Fusions-Hydrophobin mit dem vollständigen Fusionspartner yaad eingesetzt (yaad-Xa-dewA-his; nachfolgend Hydrophobin A genannt) sowie ein Fusions-Hydrophobin mit einem auf 40 Aminosäuren verkürzten Fusionspartner yaad40-Xa-dewA-his (Hydrophobin B). Die Herstellung der Hydrophobine erfolgte gemäß der in WO 2006/082253 beschriebenen Verfahrensweise. Die Produkte wurden nach dem vereinfachten Reinigungsverfahren gemäß Beispiel 9 von WO 2006/82253 aufgearbeitet und gemäß Beispiel 10 sprühgetrocknet. Der Gesamtproteingehalt der erhaltenen, getrockneten Produkte betrug jeweils ca. 70 bis 95 Gew. -%, der Gehalt an Hydrophobinen betrug ca. 40 bis 90 Gew. % bezüglich des Gesamtproteingehaltes. Die Produkte wurden als solche für die Versuche eingesetzt.

### Beispiel 2: Anwendungstechnische Prüfung der Hydrophobine

Charakterisierung der Fusions-Hydrophobine durch Kontaktwinkeländerung eines Wassertropfens auf Glas (Fensterglas, Süddeutsche Glas, Mannheim):
Für die Tests wurden die sprühgetrockneten Fusions-Hydrophobine enthaltenden Produkte in Wasser unter Zusatz von 50 mM Na-Acetat pH 4 und 0,1 Gew. % Polyoxyethylen(20)-sorbitanmonolaureat (Tween^{®} 20) gelöst. Die Konzentration des Produktes betrug 100 µg/mL in wässriger Lösung.

### Vorgehensweise:

- Inkubation von Glasplättchen über Nacht (Temperatur 80°C), danach Beschichtung waschen in destilliertem Wasser,
- danach Inkubation 10min / 80°C / 1% Natrium-Dodecylsulfat (SDS) -Lösung in dest. Wasser,
- Waschen in dest. Wasser

Die Proben werden an der Luft getrocknet und der Kontaktwinkel (in Grad) eines Tropfens von 5 µl Wasser bei Raumtemperatur bestimmt. Die Kontaktwinkelmessung wurde auf einem Gerät Dataphysics Contact Angle System OCA 15+, Software SCA 20.2.0. (November 2002) bestimmt. Die Messung erfolgte gemäß den Herstellerangaben.

Unbehandeltes Glas ergab einen Kontaktwinkel von 15° bis 30° ± 5°. Eine Beschichtung mit dem Fusions-Hydrophobin yaad-Xa-dewA-his₆ ergab eine Kontaktwinkelvergrößerung von mehr als 30°; eine Beschichtung mit dem Fusions-Hydrophobin yaad40-Xa-dewA-his ergab ebenfalls eine Kontaktwinkelvergrößerung von mehr als 30°.

### Beispiel 3: Herstellung der Klebebindungen und Bestimmung der mechanischen Stabilität der Klebebindungen

Ein Buchblock (DIN A4, d.h. Rückenlänge von 297 mm) wurde in eine Buchblock-Zange eingespannt, so dass die zu bindende Kante etwa 2 mm frei aus der Zange herausragt (so genannter Aushang). Dieser Buchblock wird durch eine Fräsvorrichtung aufgeraut. Durch diese Vorbehandlung werden die Fasern freigelegt. Danach wird der aufgeraute Buchblockrücken mit einer 0,1 Gew%igen wässrigen Lösung eines sprühgetrockneten Fusions-Hydrophobins A (yaad-Xa-dewA-his), welches wie in Beispiel 1 beschrieben hergestellt wurde, benetzt ("erdfeucht"). Danach wird in einer Buchklebemaschine vom Typ Ribler Junior Binder oder Ribler Express Binder (Hersteller Ribbler, Stuttgart) über eine Düse eine Klebstoff-Dispersion der folgenden Zusammensetzung nass in nass aufgetragen.
75 Gew.-% Styrol-Acrylat Type 525, Hersteller Scott Bader, UK
25 Gew. % Styrol-Acrylsäureester, DA 194, Hersteller Ercros, DE

Die Klebstoff-Dispersion wies eine Viskosität (gemessen mit Fordbecher, 5 mm Düse) von < 1000 mPas auf.

### Beispiel 4: Bestimmung der mechanischen Stabilität der Klebebindungen

Es wurden Buchblöcke von jeweils 2 cm Dicke aus verschiedenen Papiersorten (Nr. 1 bis Nr. 5) wie in Beispiel 3 beschrieben verklebt. Als Vergleichsbeispiele wurden Buchblöcke ohne Hydrophobin-Vorbehandlung ebenfalls von 2 cm Dicke analog zu den oben beschriebenen Verfahren angeraut und in einer Bindemaschine vom Typ Ribler Junior Binder oder Ribler Express Binder (Hersteller Ribbler, Stuttgart, DE) über eine Düse mit der oben beschriebenen Klebe-Rezeptur verklebt.

An den verschiedenen Buchblöcken wurden die Blattauszugskräfte (in N/cm) durch den so genannten page-pull-Test bestimmt. Hierbei wurde die zu prüfende Klebebindung in das Pull-Test-Gerät aufgeschlagen eingespannt. Dann wird ein einzelnes Blatt mit einer Klemmschiene unter allmählich ansteigender Zugkraft aus der Klebebindung herausgelöst oder bis zum Papier-Abriss belastet. Je höher die erforderliche Zugkraft angegeben in N/cm ist desto fester ist die Klebebindung.

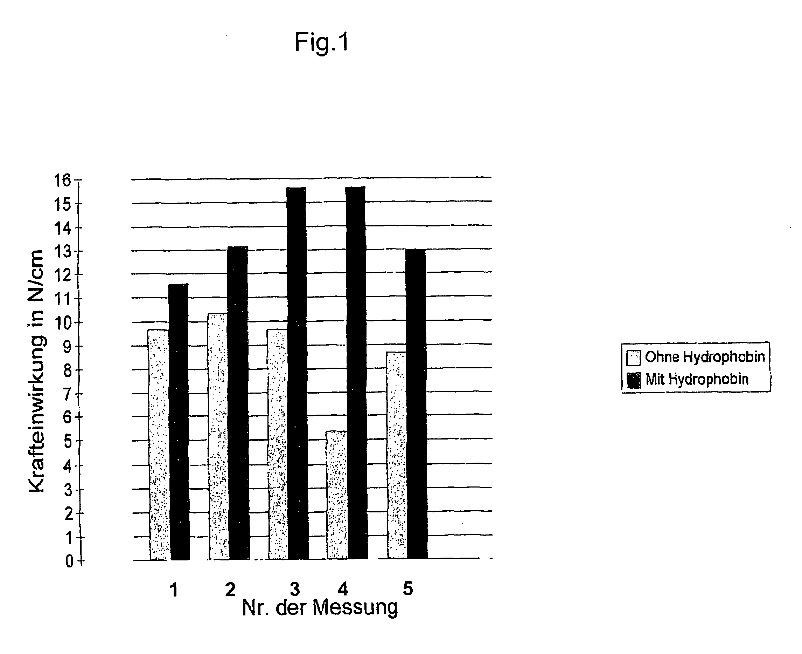

Die Ergebnisse des page-pull-Tests sind in Abbildung 1 dargestellt. Die fünf Ergebnisse beziehen sich auf unterschiedliche Papiersorten 1 bis 5. Die dunklen Balken stellen die Ergebnisse mit Hydrophobin dar, die hellen Balken geben die Ergebnisse ohne Hydrophobin-Vorbehandlung wieder. Man erkennt, dass die Festigkeitswerte mit Hydrophobin um 20 - 100 % höher liegen als die Vergleichsbeispiele ohne Hydrophobin.

### Beispiel 5: Beurteilung Kohäsionsbruch (KOH) und Adhäsionsbruch (ADH)

Zur Beurteilung von Adhäsion und Kohäsion wurde die Klebebindung plan aufgeschlagen und unter dem Mikroskop betrachtet. Es wurde an einer Blattkante gezogen, wobei sich die Klebstoffnaht dehnte. Wenn sich der Klebstoff von der Papierfaser löst, handelt es sich um einen Adhäsionsbruch. Wenn sich dagegen der Klebstoff nicht an der Papierfaser sondern in der Mitte der Klebstoffnaht aufreißt, handelt es sich um einen Kohäsionsbruch.

Bei herkömmlich verklebten Buchblöcken ist unter dem Mikroskop leicht zu erkennen, dass sich der Klebstoff relativ leicht von der Faser löst. Wurde der Buchblock-Rücken vorab mit Hydrophobin wie in Beispiel 3 beschrieben behandelt, kann man unter dem Mikroskop einen Kohäsionsbruch erkennen, d.h. der Klebstoff-Film trennt sich in der Mitte und es bleiben Klebstoffreste an der Faser hängen.

### Beispiel 6: Erzeugung der vorteilhaften Oberflächenspannung mittels Zugabe des Zusatzstoffes (Z):

Zu 100 ml einer 0,1 Gew.-%igen wässrigen Lösung eines sprühgetrockneten Fusions-Hydrophobins A, welches wie in Beispiel 1 beschrieben hergestellt wurde, wurden 0,04 ml von einem Tensid auf der Basis von Alkoholalkoxylaten (Tego Surten W 111, Hersteller beispielsweise Degussa/Evonik, Deutschland) gegeben. Die gemessene Oberflächenspannung ergab 33 mN/m. Damit konnte ein ausgezeichnetes Benetzungsvermögen der Lösung erreicht werden. Dies verbessert die Klebebindung beim Verkleben von Papiererzeugnissen.

## Patentansprüche

1. Zusammensetzung zum Verkleben von Papiererzeugnissen enthaltend
a) 0,001 - 10 Gew.-% eines Hydrophobins (H),
b) einen Klebstoff (K),
c) gegebenenfalls ein Löse- und/oder Dispergiermittel (L) und
d) gegebenenfalls weitere Zusatzstoffe (Z).

2. Zusammensetzung nach Anspruch 1 enthaltend:
a) 0,001 - 10 Gew.-% eines Hydrophobins (H),
b) 50 - 99,999 Gew.-% eines Klebstoffes (K),
c) 0 - 40 Gew.-% eines Löse- und/oder Dispergiermittels (L) und
d) 0 - 10 Gew.-% weitere Zusatzstoffe (Z).

3. Zusammensetzung nach einem der Ansprüche 1 oder 2, **dadurch gekennzeichnet, dass** die Zusammensetzung mindestens ein Hydrophobin (H) in einem Bereich von 0,001 bis 0,1 Gew.-%, enthält.

4. Zusammensetzung nach einem der Ansprüche 1 bis 3, **dadurch gekennzeichnet, dass** der Klebstoff (K) ausgewählt ist aus der Gruppe der Dispersions-Klebstoffe enthaltend Homo- oder Copolymere aus Vinylacetat, Ethylvinylacetat, Acrylaten, Styrol-Acrylat oder Polyurethan.

5. Zusammensetzung nach einem der Ansprüche 1 bis 4, **dadurch gekennzeichnet, dass** es sich bei dem Hydrophobin (H) um mindestens ein Fusions-Hydrophobin handelt mit einer Polypeptidsequenz ausgewählt aus der Gruppe von SEQ ID NO:20; SEQ ID NO 22; SEQ ID NO 24.

6. Zusammensetzung nach einem der Ansprüche 1 bis 5, **dadurch gekennzeichnet, dass** als weiterer Zusatzstoff (Z) mindestens ein Benetzungsmittel im Bereich von 0,0001 bis 10 Gew.% enthalten ist.

7. Verfahren zum Verkleben eines Papiererzeugnisses, wobei die Komponenten der Zusammensetzung nach einem der Ansprüche 1 bis 6 auf das Papiererzeugnis aufgebracht werden.

8. Verfahren nach Anspruch 7, **dadurch gekennzeichnet, dass** auf das Papiererzeugnis zunächst eine Zusammensetzung enthaltend mindestens ein Hydrophopin (H) und daran anschließend eine Zusammensetzung enthaltend den Klebstoff (K) aufgetragen werden.

9. Verfahren nach einem der Ansprüche 7 oder 8, **dadurch gekennzeichnet, dass** auf das Papiererzeugnis zunächst eine wässrige Lösung enthaltend 0,001 bis 10 Gew. % mindestens eines Hydrophobins (H) und daran anschließend eine Zusammensetzung enthaltend den Klebstoff (K) aufgetragen werden.

10. Verfahren nach einem der Ansprüche 7 bis 9, **dadurch gekennzeichnet, dass** zunächst auf das Papiererzeugnis eine wässrige Lösung enthaltend 0,001 bis 10 Gew. % mindestens eines Hydrophobins (H) und daran unmittelbar anschließend ohne Zwischentrocknung ein wässriger Dispersionsklebstoff (K) aufgetragen werden, wobei es sich bei dem Hydrophobin um ein Fusions-Hydrophobin mit einer Polypeptidsequenz ausgewählt aus der Gruppe von SEQ ID NO:20; SEQ ID NO 22; SEQ ID NO 24 handelt, und wobei es sich bei dem Papiererzeugnis um einen Buchblockrücken handelt.

11. Verfahren nach einem der Ansprüche 7 bis 10, **dadurch gekennzeichnet, dass** die Zusammensetzung enthaltend mindestens ein Hydrophobin (H) als weiteren Zusatzstoff (Z) mindestens ein Benetzungsmittel im Bereich von 0,0001 bis 10 Gew.% enthält.

12. Verfahren nach Anspruch 7, **dadurch gekennzeichnet, dass** die Komponenten gemischt und auf ein Papiererzeugnis aufgetragen werden.

13. Verfahren nach einem der Ansprüche 7 oder 12, **dadurch gekennzeichnet, dass** eine wässrige Lösung mindestens eines Hydrophobins (H) mit einem wässrigen Dispersionsklebstoff (K) und gegebenenfalls weiteren Zusatzstoffen (Z) vermischt und auf das Papiererzeugnis aufgetragen wird.

14. Verwendung von mindestens einem Hydrophobin (H) als Hilfsstoff in Zusammensetzungen zum Verkleben von Papiererzeugnissen bei der Druckweiterverarbeitung.

15. Verwendung gemäß Anspruch 14, wobei das Hydrophobin als Hilfsstoff zusammen mit einem wässrigen Klebstoff bei der Druckweiterverarbeitung eingesetzt wird.

16. Verwendung gemäß einem der Ansprüche 14 oder 15, wobei es sich bei dem Hydrophobin um mindestens ein Fusionsprotein mit einer Polypeptidsequenz ausgewählt aus der Gruppe von SEQ ID NO:20; SEQ ID NO 22; SEQ ID NO 24 handelt und als Hilfsstoff in wässrigen Dispersionen beim Klebebinden von Papiererzeugnissen eingesetzt wird.

17. Papiererzeugnisse, welche mit einer Zusammensetzung nach einem der Ansprüche 1 bis 6 verklebt wurden.

## Claims

1. A composition for the adhesive bonding of paper products, comprising
a) 0.001-10% by weight of a hydrophobin (H),
b) an adhesive (A),
c) optionally a solvent and/or dispersant (S) and
d) optionally further additives (Z).

2. The composition according to claim 1, comprising:
a) 0.001-10% by weight of a hydrophobin (H),
b) 50-99.999% by weight of an adhesive (A),
c) 0-40% by weight of a solvent and/or dispersant (S) and
d) 0-10% by weight of further additives (Z).

3. The composition according to any one of claims 1 or 2, wherein the composition comprises at least one hydrophobin (H) in a range from 0.001 to 0.1% by weight.

4. The composition according to any one of claims 1 to 3, wherein the adhesive (A) is selected from the group of dispersion adhesives comprising homopolymers or copolymers of vinyl acetate, ethylvinyl acetate, acrylates, styrene acrylate or polyurethane.

5. The composition according to any one of claims 1 to 4, wherein the hydrophobin (H) is at least one fusion hydrophobin with a polypeptide sequence selected from the group of SEQ ID NO: 20; SEQ ID NO 22; SEQ ID NO 24.

6. The composition according to any one of claims 1 to 5, wherein at least one wetting agent in the range from 0.0001 to 10% by weight is present as further additive (Z).

7. A method for the adhesive bonding of a paper product, where the components of the composition according to any one of claims 1 to 6 are applied to the paper product.

8. The method according to claim 7, wherein firstly a composition comprising at least one hydrophobin (H), and subsequently a composition comprising the adhesive (A) are applied to the paper product.

9. The method according to any one of claims 7 or 8, wherein firstly an aqueous solution comprising 0.001 to 10% by weight of at least one hydrophobin (H) and subsequently a composition comprising the adhesive (A) are applied to the paper product.

10. The method according to any one of claims 7 to 9, wherein firstly an aqueous solution comprising 0.001 to 10% by weight of at least one hydrophobin (H) and then immediately afterwards, without interim drying, an aqueous dispersion adhesive (A) are applied to the paper product, where the hydrophobin is a fusion hydrophobin with a polypeptide sequence selected from the group of SEQ ID NO: 20; SEQ ID NO 22; SEQ ID NO 24, and where the paper product is a book block spine.

11. The method according to any one of claims 7 to 10, wherein the composition comprising at least one hydrophobin (H) comprises at least one wetting agent in the range from 0.0001 to 10% by weight as further additive (Z).

12. The method according to claim 7, wherein the components are mixed and applied to a paper product.

13. The method according to any one of claims 7 or 12, wherein an aqueous solution of at least one hydrophobin (H) is mixed with an aqueous dispersion adhesive (A) and optionally further additives (Z) and applied to the paper product.

14. The use of at least one hydrophobin (H) as auxiliary in compositions for the adhesive bonding of paper products during print finishing.

15. The use according to claim 14, where the hydrophobin is used as auxiliary together with an aqueous adhesive during print finishing.

16. The use according to any one of claims 14 or 15, where the hydrophobin is at least one fusion protein with a polypeptide sequence selected from the group of SEQ ID NO: 20; SEQ ID NO 22; SEQ ID NO 24 and is used as auxiliary in aqueous dispersions during the adhesive binding of paper products.

17. A paper product which has been adhesively bonded with a composition according to any one of claims 1 to 6.

## Revendications

1. Composition pour coller des produits de papier, contenant :
a) 0,001-10 % en poids d'une hydrophobine (H),
b) un adhésif (K),
c) éventuellement, un solvant et/ou un dispersant (L) et
d) éventuellement, d'autres additifs (Z).

2. Composition selon la revendication 1, contenant :
a) 0,001-10 % en poids d'une hydrophobine (H),
b) 50-99,999 % en poids d'un adhésif (K),
c) 0-40 % en poids d'un solvant et/ou dispersant (L), et
d) 0-10 % en poids d'autres additifs (Z).

3. Composition selon l'une des revendications 1 ou 2, **caractérisée en ce que** la composition contient au moins une hydrophobine (H) en une quantité comprise dans la plage de 0,001 à 0,1 % en poids.

4. Composition selon l'une des revendications 1 à 3, **caractérisée en ce que** l'adhésif (K) est choisi dans le groupe des adhésifs en dispersion contenant des homo- ou des copolymères d'acétate de vinyle, d'acétate d'éthylvinyle, d'acrylates, de styrène-acrylate ou d'un polyuréthanne.

5. Composition selon l'une des revendications 1 à 4, **caractérisée en ce que**, pour ce qui concerne l'hydrophobine (H), il s'agit au moins d'une hydrophobine de fusion, ayant une séquence polypeptidique choisie dans le groupe consistant en SEQ ID NO:20, SEQ ID NO:22, SEQ ID NO:24.

6. Composition selon l'une des revendications 1 à 5, **caractérisée en ce qu'**elle contient en tant qu'autre additif (Z) au moins un mouillant en une quantité comprise dans la plage de 0,0001 à 10 % en poids.

7. Procédé pour coller un produit de papier, dans lequel les composants de la composition selon l'une des revendications 1 à 6 sont appliqués sur le produit de papier.

8. Procédé selon la revendication 7, **caractérisé en ce qu'**on applique sur le produit de papier, d'abord une composition contenant au moins une hydrophobine (H), puis une composition contenant l'adhésif (K).

9. Procédé selon l'une des revendications 7 ou 8, **caractérisé en ce qu'**on applique sur le produit de papier, d'abord une solution aqueuse contenant 0,001 à 10 % en poids d'au moins une hydrophobine (H), puis une composition contenant l'adhésif (K).

10. Procédé selon l'une des revendications 7 à 9, **caractérisé en ce qu'**on applique d'abord sur le produit de papier une solution aqueuse contenant 0,001 à 10 % en poids d'au moins une hydrophobine (H), puis, immédiatement après, et sans séchage intermédiaire, un adhésif en dispersion aqueuse (K), auquel cas, pour ce qui concerne l'hydrophobine, il s'agit d'une hydrophobine de fusion ayant une séquence polypeptidique choisie dans le groupe consistant en SEQ ID NO:20, SEQ ID NO:22, SEQ ID NO:24, et, pour ce qui concerne le produit de papier, il s'agit d'un dos de corps d'ouvrage.

11. Procédé selon l'une des revendications 7 à 10, **caractérisé en ce que** la composition contenant au moins une hydrophobine (H) contient en tant qu'autre additif (Z) au moins un agent mouillant en une quantité comprise dans la plage de 0,0001 à 10 % en poids.

12. Procédé selon la revendication 7, **caractérisé en ce que** les composants sont mélangés, et appliqués sur un produit de papier.

13. Procédé selon l'une des revendications 7 ou 12, **caractérisé en ce qu'**une solution aqueuse d'au moins une hydrophobine (H) est mélangée à un adhésif en dispersion aqueuse (K) et éventuellement à d'autres additifs (Z), et est appliquée sur le produit de papier.

14. Utilisation d'au moins une hydrophobine (H) en tant qu'adjuvant dans des compositions pour le collage de produits de papier lors de la post-transformation après impression.

15. Utilisation selon la revendication 14, pour laquelle l'hydrophobine, en tant qu'adjuvant, est utilisée en même temps qu'un adhésif aqueux lors de la post-transformation de l'impression.

16. Utilisation selon l'une des revendications 14 ou 15, pour laquelle, pour ce qui concerne l'hydrophobine, il s'agit d'au moins une protéine de fusion ayant une séquence polypeptidique choisie dans le groupe consistant en SEQ ID NO:20, SEQ ID NO:22, SEQ ID NO:24, et on l'utilise en tant qu'adjuvant dans des dispersions aqueuses lors de la reliure par collage de produits de papier.

17. Produits de papier qui ont été collés avec une composition selon l'une des revendications 1 à 6.
